# EUROPEAN PATENT APPLICATION

(11) **EP 4 564 977 A1**
(43) Date of publication of application: **04.06.2025**
(21) Application number: 23870406.8
(22) Date of filing: 15.09.2023
(51) Int. Cl.: H04W 72/12, H04W 72/02

(54) **DATA TRANSMISSION METHOD AND APPARATUS**

(30) Priority: 29.09.2022 CN 202211199834
(71) Applicant: Huawei Technologies Co., Ltd., Shenzhen, Guangdong 518129 (CN)
(72) Inventor: CHEN, Erkai, Shenzhen, Guangdong 518129 (CN); QIN, Yi, Shenzhen, Guangdong 518129 (CN); XU, Rui, Shenzhen, Guangdong 518129 (CN); CAO, Youlong, Shenzhen, Guangdong 518129 (CN)
(74) Representative: Maiwald GmbH
(86) International application number: PCT/CN2023/119198
(87) International publication number: WO 2024/067172

(57) **Abstract**

A data transmission method and apparatus are provided. The method includes: receiving first configuration information from a network device, where the first configuration information is for configuring a first threshold and a second threshold; and sending a scheduling request to the network device, where the scheduling request is for requesting a resource for scheduling data, and the scheduling request indicates at least one of a value relationship between a remaining delay budget of the data and the first threshold or a value relationship between a data amount of the data and the second threshold, where the remaining delay budget of the data is an upper limit of remaining duration for completing transmission of the data. According to the solution provided in this application, the network device can determine the remaining delay budget of the data and the data amount of the data, to complete the transmission of the data within the delay budget of the data, thereby improving communication performance.

## Description

This application claims priority to Chinese Patent Application No. 202211199834.0, filed with the China National Intellectual Property Administration on September 29, 2022 and entitled "DATA TRANSMISSION METHOD AND APPARATUS", which is incorporated herein by reference in its entirety.

### TECHNICAL FIELD

Embodiments of this application relate to the field of communication, and more specifically, to a data transmission method and apparatus.

### BACKGROUND

With development of communication, some multimedia services with strong real-time performance and a high data capacity requirement, for example, video transmission, cloud gaming (cloud gaming, CG), and extended reality (extended reality, XR), gradually penetrate into a 5th generation (5th generation, 5G) communication system. These multimedia services usually have a strict requirement on a data transmission delay. Therefore, how to ensure the requirement on the data transmission delay is a problem that needs to be considered.

### SUMMARY

Embodiments of this application provide a communication method and a communication apparatus, to complete data transmission within a delay budget of data and improve communication performance.

According to a first aspect, a communication method is provided. The method may be performed by a terminal device, or may be performed by a chip or a circuit in the terminal device, or may be performed by a logical module or software that can implement all or a part of functions of the terminal device. This is not limited in this application.

The method includes: receiving first configuration information from a network device, where the first configuration information is for configuring a first threshold and a second threshold; and sending a scheduling request to the network device, where the scheduling request is for requesting a resource for scheduling data, and the scheduling request indicates at least one of a value relationship between a remaining delay budget of the data and the first threshold or a value relationship between a data amount of the data and the second threshold, where the remaining delay budget of the data is an upper limit of remaining duration for completing transmission of the data.

Based on the foregoing solution, when a threshold (the first threshold) of the remaining delay budget of the data and the data amount (the second threshold) of the data are configured for the terminal device, the terminal device may send, to the network device, the scheduling request indicating the value relationship between the remaining delay budget of the data and the first threshold and/or the value relationship between the data amount of the data and the second threshold, so that the network device can schedule, based on the scheduling request, the resource for transmission of the data, to reduce a data transmission delay and improve communication performance.

With reference to the first aspect, in some implementations of the first aspect, the scheduling request indicates one of the following relationships: the data amount of the data is less than the second threshold; the data amount of the data is greater than or equal to the second threshold, and the remaining delay budget of the data is greater than or equal to the first threshold; or the data amount of the data is greater than or equal to the second threshold, and the remaining delay budget of the data is less than the first threshold.

Based on the foregoing solution, the scheduling request indicates any one of the foregoing relationships, so that the network device can learn of the value relationship between the data amount of the data and the second threshold; or the network device can learn of the value relationship between the remaining delay budget of the data and the first threshold and the value relationship between the data amount of the data and the second threshold. In this way, signaling overheads can be reduced.

With reference to the first aspect, in some implementations of the first aspect, the scheduling request indicates one of the following relationships: the remaining delay budget of the data is greater than or equal to the first threshold; the remaining delay budget of the data is less than the first threshold, and the data amount of the data is less than the second threshold; or the remaining delay budget of the data is less than the first threshold, and the data amount of the data is greater than or equal to the second threshold.

Based on the foregoing solution, the scheduling request indicates any one of the foregoing relationships, so that the network device can learn of the value relationship between the remaining delay budget of the data and the first threshold; or the network device can learn of the value relationship between the remaining delay budget of the data and the first threshold and the value relationship between the data amount of the data and the second threshold. In this way, signaling overheads can be reduced.

With reference to the first aspect, in some implementations of the first aspect, the scheduling request indicates one of the following relationships: the remaining delay budget of the data is greater than or equal to the first threshold, and the data amount of the data is less than the second threshold; the remaining delay budget of the data is greater than or equal to the first threshold, and the data amount of the data is greater than or equal to the second threshold; the remaining delay budget of the data is less than the first threshold, and the data amount of the data is less than the second threshold; or the remaining delay budget of the data is less than the first threshold, and the data amount of the data is greater than or equal to the second threshold.

Based on the foregoing solution, the scheduling request indicates any one of the foregoing relationships, so that the network device can learn of the value relationship between the remaining delay budget of the data and the first threshold and the value relationship between the data amount of the data and the second threshold. In this way, signaling overheads can be reduced.

With reference to the first aspect, in some implementations of the first aspect, the scheduling request is carried in a physical uplink control channel PUCCH format 0.

Based on the foregoing solution, the scheduling request indicating different information may be indicated via values of different sequence cyclic shifts in the PUCCH format 0, so that processing complexity for the network device can be reduced.

With reference to the first aspect, in some implementations of the first aspect, second configuration information is received from the network device, and the scheduling request is sent to the network device based on the second configuration information.

Based on the foregoing solution, when the second configuration information is configured, the terminal device can send the scheduling request indicating the value relationship between the remaining delay budget of the data and the first threshold and/or the value relationship between the data amount of the data and the second threshold.

According to a second aspect, a communication method is provided. The method may be performed by a network device, or may be performed by a chip or a circuit in the network device, or may be performed by a logical module or software that can implement all or a part of functions of the network device. This is not limited in this application.

The method includes: sending first configuration information to a terminal device, where the first configuration information is for configuring a first threshold and a second threshold; and receiving a scheduling request from the terminal device, where the scheduling request is for requesting a resource for scheduling data, and the scheduling request indicates at least one of a value relationship between a remaining delay budget of the data and the first threshold or a value relationship between a data amount of the data and the second threshold, where the remaining delay budget of the data is an upper limit of remaining duration for completing transmission of the data.

Based on the foregoing solution, the configuration information that is for configuring a threshold (the first threshold) of the remaining delay budget of the data and the data amount (the second threshold) of the data are sent to the terminal device, so that the terminal device may send, to the network device based on the configuration information, the scheduling request indicating the value relationship between the remaining delay budget of the data and the first threshold and/or the value relationship between the data amount of the data and the second threshold. In this way, the resource for transmission of the data can be scheduled for the terminal device, to reduce a data transmission delay and improve communication performance.

With reference to the second aspect, in some implementations of the second aspect, the scheduling request indicates one of the following relationships: the data amount of the data is less than the second threshold; the data amount of the data is greater than or equal to the second threshold, and the remaining delay budget of the data is greater than or equal to the first threshold; or the data amount of the data is greater than or equal to the second threshold, and the remaining delay budget of the data is less than the first threshold.

Based on the foregoing solution, the scheduling request indicates any one of the foregoing relationships, so that the network device can learn of the value relationship between the data amount of the data and the second threshold, or can learn of the value relationship between the remaining delay budget of the data and the first threshold and the value relationship between the data amount of the data and the second threshold. In addition, signaling overheads can be reduced.

With reference to the second aspect, in some implementations of the second aspect, the scheduling request indicates one of the following relationships: the remaining delay budget of the data is greater than or equal to the first threshold; the remaining delay budget of the data is less than the first threshold, and the data amount of the data is less than the second threshold; or the remaining delay budget of the data is less than the first threshold, and the data amount of the data is greater than or equal to the second threshold.

Based on the foregoing solution, the scheduling request indicates any one of the foregoing relationships, so that the network device can learn of the value relationship between the remaining delay budget of the data and the first threshold, or can learn of the value relationship between the remaining delay budget of the data and the first threshold and the value relationship between the data amount of the data and the second threshold. In addition, signaling overheads can be reduced.

With reference to the second aspect, in some implementations of the second aspect, the scheduling request indicates one of the following relationships: the remaining delay budget of the data is greater than or equal to the first threshold, and the data amount of the data is less than the second threshold; the remaining delay budget of the data is greater than or equal to the first threshold, and the data amount of the data is greater than or equal to the second threshold; the remaining delay budget of the data is less than the first threshold, and the data amount of the data is less than the second threshold; or the remaining delay budget of the data is less than the first threshold, and the data amount of the data is greater than or equal to the second threshold.

Based on the foregoing solution, the scheduling request indicates any one of the foregoing relationships, so that the network device can learn of the value relationship between the remaining delay budget of the data and the first threshold and the value relationship between the data amount of the data and the second threshold. In addition, signaling overheads can be reduced.

With reference to the second aspect, in some implementations of the second aspect, the scheduling request is carried in a physical uplink control channel PUCCH format 0.

Based on the foregoing solution, the scheduling request indicating different information may be indicated via values of different sequence cyclic shifts in the PUCCH format 0, so that processing complexity for the network device can be reduced.

With reference to the second aspect, in some implementations of the second aspect, the method further includes: sending second configuration information to the terminal device, where the second configuration information configures sending of the scheduling request.

Based on the foregoing solution, the second configuration information is sent to the terminal device, so that the terminal device can send the scheduling request indicating the value relationship between the remaining delay budget of the data and the first threshold and/or the value relationship between the data amount of the data and the second threshold. In this way, the resource for transmission of the data can be scheduled for the terminal device.

According to a third aspect, a communication method is provided. The method may be performed by a terminal device, or may be performed by a chip or a circuit in the terminal device, or may be performed by a logical module or software that can implement all or a part of functions of the terminal device. This is not limited in this application.

The method includes: receiving fourth configuration information from a network device; and sending a scheduling request to the network device based on the fourth configuration information, where the scheduling request is for requesting a resource for scheduling data, and the scheduling request indicates a ratio of a data amount of the data to a remaining delay budget of the data, where the remaining delay budget of the data is an upper limit of remaining duration for completing transmission of the data.

Based on the foregoing solution, when the terminal device is configured with the fourth configuration information, the terminal device sends the ratio (where the ratio may be referred to as a required rate of the data) of the data amount of the data to the remaining delay budget of the data, so that the network device can schedule, based on the required rate of the data, the resource for transmission of the data, to reduce a data transmission delay and improve communication performance.

With reference to the third aspect, in some implementations of the third aspect, the scheduling request is carried in a physical uplink control channel PUCCH format 0.

Based on the foregoing solution, the scheduling request indicating different information may be indicated via values of different sequence cyclic shifts in the PUCCH format 0, so that processing complexity for the network device can be reduced.

With reference to the third aspect, in some implementations of the third aspect, the method further includes: receiving fifth configuration information from the network device, where the fifth configuration information includes a required rate list of the data, and the required rate list of the data includes at least one value.

With reference to the third aspect, in some implementations of the third aspect, the scheduling request indicates a value in the required rate list.

Based on the foregoing solution, a possible value of the required rate of the data is configured based on the fifth configuration information, so that the terminal device can select a value from the configured value for sending, to reduce signaling overheads.

With reference to the third aspect, in some implementations of the third aspect, the scheduling request indicates a value relationship between the required rate of the data and the value in the required rate list.

Based on the foregoing solution, a possible value of the required rate of the data is configured based on the fifth configuration information, so that the terminal device can send the value relationship between the required rate of the data and the value in the required rate list, to reduce signaling overheads.

According to a fourth aspect, a communication method is provided. The method may be performed by a network device, or may be performed by a chip or a circuit in the network device, or may be performed by a logical module or software that can implement all or a part of functions of the network device. This is not limited in this application.

The method includes: sending fourth configuration information to a terminal device, where the fourth configuration information is for configuring sending of a scheduling request, and the scheduling request indicates a ratio of a data amount of data to a remaining delay budget of the data; and receiving the scheduling request from the terminal device, where the remaining delay budget of the data is an upper limit of remaining duration for completing transmission of the data.

Based on the foregoing solution, the fourth configuration information is sent to the terminal device, and the ratio (where the ratio may be referred to as a required rate of the data) of the data amount of the data to the remaining delay budget of the data is received from the terminal device, so that the network device can schedule, based on the required rate of the data, a resource for transmission of the data, to reduce a data transmission delay and improve communication performance.

With reference to the fourth aspect, in some implementations of the fourth aspect, the scheduling request is carried in a physical uplink control channel PUCCH format 0.

With reference to the fourth aspect, in some implementations of the fourth aspect, the method further includes: sending fifth configuration information to the terminal device, where the fifth configuration information includes a required rate list of the data, and the required rate list of the data includes at least one value.

With reference to the fourth aspect, in some implementations of the fourth aspect, the scheduling request indicates a value in the required rate list.

Based on the foregoing solution, a possible value of the required rate of the data is configured based on the fifth configuration information, so that the terminal device can select a value from the configured value for sending, to reduce signaling overheads.

With reference to the fourth aspect, in some implementations of the fourth aspect, the scheduling request indicates a value relationship between the required rate of the data and the value in the required rate list.

Based on the foregoing solution, a possible value of the required rate of the data is configured based on the fifth configuration information, so that the terminal device can send the value relationship between the required rate of the data and the value in the required rate list, to reduce signaling overheads.

According to a fifth aspect, a communication apparatus is provided. The communication apparatus may be a terminal device, a chip or a circuit in the terminal device, or a logical module or software that can implement all or a part of functions of the terminal device. This is not limited in this application.

The apparatus includes an interface unit, where the interface unit is configured to receive first configuration information from a network device, where the first configuration information is for configuring a first threshold and a second threshold; and the interface unit is further configured to send a scheduling request to the network device, where the scheduling request is for requesting a resource for scheduling data, and the scheduling request indicates at least one of a value relationship between a remaining delay budget of the data and the first threshold or a value relationship between a data amount of the data and the second threshold, where the remaining delay budget of the data is an upper limit of remaining duration for completing transmission of the data.

With reference to the fifth aspect, in some implementations of the fifth aspect, the scheduling request indicates one of the following relationships: the data amount of the data is less than the second threshold; the data amount of the data is greater than or equal to the second threshold, and the remaining delay budget of the data is greater than or equal to the first threshold; or the data amount of the data is greater than or equal to the second threshold, and the remaining delay budget of the data is less than the first threshold.

With reference to the fifth aspect, in some implementations of the fifth aspect, the scheduling request indicates one of the following relationships: the remaining delay budget of the data is greater than or equal to the first threshold; the remaining delay budget of the data is less than the first threshold, and the data amount of the data is less than the second threshold; or the remaining delay budget of the data is less than the first threshold, and the data amount of the data is greater than or equal to the second threshold.

With reference to the fifth aspect, in some implementations of the fifth aspect, the scheduling request indicates one of the following relationships: the remaining delay budget of the data is greater than or equal to the first threshold, and the data amount of the data is less than the second threshold; the remaining delay budget of the data is greater than or equal to the first threshold, and the data amount of the data is greater than or equal to the second threshold; the remaining delay budget of the data is less than the first threshold, and the data amount of the data is less than the second threshold; or the remaining delay budget of the data is less than the first threshold, and the data amount of the data is greater than or equal to the second threshold.

With reference to the fifth aspect, in some implementations of the fifth aspect, the scheduling request is carried in a physical uplink control channel PUCCH format 0.

With reference to the fifth aspect, in some implementations of the fifth aspect, the interface unit is further configured to receive second configuration information from the network device; and the communication apparatus further includes a processing unit, and the processing unit is configured to: control, based on the second configuration information, the apparatus to send the scheduling request to the network device.

According to a sixth aspect, a communication apparatus is provided. The communication apparatus may be a network device, a chip or a circuit in the network device, or a logical module or software that can implement all or a part of functions of the network device. This is not limited in this application.

The communication apparatus includes an interface unit, where the interface unit is configured to send first configuration information to a terminal device, where the first configuration information is for configuring a first threshold and a second threshold; and the interface unit is further configured to receive a scheduling request from the terminal device, where the scheduling request is for requesting a resource for scheduling data, and the scheduling request indicates at least one of a value relationship between a remaining delay budget of the data and the first threshold or a value relationship between a data amount of the data and the second threshold, where the remaining delay budget of the data is an upper limit of remaining duration for completing transmission of the data.

With reference to the sixth aspect, in some implementations of the sixth aspect, the scheduling request indicates one of the following relationships: the data amount of the data is less than the second threshold; the data amount of the data is greater than or equal to the second threshold, and the remaining delay budget of the data is greater than or equal to the first threshold; or the data amount of the data is greater than or equal to the second threshold, and the remaining delay budget of the data is less than the first threshold.

With reference to the sixth aspect, in some implementations of the sixth aspect, the scheduling request indicates one of the following relationships: the remaining delay budget of the data is greater than or equal to the first threshold; the remaining delay budget of the data is less than the first threshold, and the data amount of the data is less than the second threshold; or the remaining delay budget of the data is less than the first threshold, and the data amount of the data is greater than or equal to the second threshold.

With reference to the sixth aspect, in some implementations of the sixth aspect, the scheduling request indicates one of the following relationships: the remaining delay budget of the data is greater than or equal to the first threshold, and the data amount of the data is less than the second threshold; the remaining delay budget of the data is greater than or equal to the first threshold, and the data amount of the data is greater than or equal to the second threshold; the remaining delay budget of the data is less than the first threshold, and the data amount of the data is less than the second threshold; or the remaining delay budget of the data is less than the first threshold, and the data amount of the data is greater than or equal to the second threshold.

With reference to the sixth aspect, in some implementations of the sixth aspect, the scheduling request is carried in a physical uplink control channel PUCCH format 0.

With reference to the sixth aspect, in some implementations of the sixth aspect, the interface unit is further configured to send second configuration information to the terminal device, where the second configuration information configures sending of the scheduling request.

According to a seventh aspect, a communication apparatus is provided. The communication apparatus may be a terminal device, a chip or a circuit in the terminal device, or a logical module or software that can implement all or a part of functions of the terminal device. This is not limited in this application.

The communication apparatus includes an interface unit and a processing unit. The interface unit is configured to receive fourth configuration information from a network device; and the processing unit is configured to: control, based on the fourth configuration information, the apparatus to send a scheduling request to the network device, where the scheduling request is for requesting a resource for scheduling data, and the scheduling request indicates a ratio of a data amount of the data to a remaining delay budget of the data, where the remaining delay budget of the data is an upper limit of remaining duration for completing transmission of the data.

With reference to the seventh aspect, in some implementations of the seventh aspect, the scheduling request is carried in a physical uplink control channel PUCCH format 0.

With reference to the seventh aspect, in some implementations of the seventh aspect, the interface unit is further configured to receive fifth configuration information from the network device, where the fifth configuration information includes a required rate list of the data, and the required rate list of the data includes at least one value.

With reference to the seventh aspect, in some implementations of the seventh aspect, the scheduling request indicates a value in the required rate list.

With reference to the seventh aspect, in some implementations of the seventh aspect, the scheduling request indicates a value relationship between a required rate of the data and the value in the required rate list.

According to an eighth aspect, a communication apparatus is provided. The communication apparatus may be a network device, a chip or a circuit in the network device, or a logical module or software that can implement all or a part of functions of the network device. This is not limited in this application.

The apparatus includes an interface unit, where the interface unit is configured to send fourth configuration information to a terminal device, where the fourth configuration information is for configuring sending of a scheduling request, and the scheduling request indicates a ratio of a data amount of data to a remaining delay budget of the data; and the interface unit is further configured to receive the scheduling request from the terminal device, and the remaining delay budget of the data is an upper limit of remaining duration for completing transmission of the data.

With reference to the eighth aspect, in some implementations of the eighth aspect, the scheduling request is carried in a physical uplink control channel PUCCH format 0.

With reference to the eighth aspect, in some implementations of the eighth aspect, the interface unit is further configured to send fifth configuration information to the terminal device, where the fifth configuration information includes a required rate list of the data, and the required rate list of the data includes at least one value.

With reference to the eighth aspect, in some implementations of the eighth aspect, the scheduling request indicates a value in the required rate list.

With reference to the eighth aspect, in some implementations of the eighth aspect, the scheduling request indicates a value relationship between a required rate of the data and the value in the required rate list.

According to a ninth aspect, a communication apparatus is provided. The apparatus includes a processor, the processor is coupled to a memory, and may be configured to execute instructions in the memory, to implement the method in any one of the first aspect to the fourth aspect and any one of possible implementations of the first aspect to the fourth aspect. Optionally, the apparatus further includes the memory. The memory and the processor may be separately deployed, or may be centrally deployed. Optionally, the apparatus further includes a communication interface, and the processor is coupled to the communication interface.

In an implementation, the communication interface may be a transceiver or an input/output interface.

In another implementation, the apparatus is a terminal device or a network device, or a chip configured in the terminal device or the network device, or may be a logical module or software that can implement all or a part of functions of the terminal device or the network device. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but is not limited to, a receiver, a signal output by the output circuit may be output to, but is not limited to, a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

According to a tenth aspect, a communication apparatus is provided. The apparatus includes a logic circuit and an input/output interface, and the logic circuit is configured to be coupled to the input/output interface and transmit data through the input/output interface, to perform the method in any one of the first aspect to the fourth aspect and any one of possible implementations of the first aspect to the fourth aspect.

In an implementation, the apparatus is a terminal device or a network device, or a chip configured in the terminal device or the network device, or may be a logical module or software that can implement all or a part of functions of the terminal device or the network device. When the apparatus is a chip, the communication interface may be an input/output interface, an interface circuit, an output circuit, an input circuit, a pin, a related circuit, or the like on the chip or a chip system. A processor may alternatively be embodied as a processing circuit or a logic circuit.

According to an eleventh aspect, this application provides a chip system, including a processor. The processor is configured to execute a computer program or instructions in a memory, so that the chip system implements the method in any one of the first aspect to the fourth aspect and any one of possible implementations of the first aspect to the fourth aspect.

According to a twelfth aspect, this application provides a chip system, including a terminal device and a network device. The terminal device is configured to perform the method in the first aspect or the third aspect and any one of possible implementations of the first aspect or the third aspect. The network device is configured to perform the method in the second aspect or the fourth aspect and any one of possible implementations of the second aspect or the fourth aspect.

According to a thirteenth aspect, a computer-readable storage medium is provided. The computer-readable storage medium stores a computer program (which may also be referred to as code or instructions). When the computer program is run on a computer, the computer is caused to perform the method in any one of the first aspect to the fourth aspect and any one of possible implementations of the first aspect to the fourth aspect.

According to a fourteenth aspect, a computer program product is provided. The computer program product includes a computer program (which may also be referred to as code or instructions). When the computer program is run, a computer is caused to perform the method in any one of the first aspect to the fourth aspect and any one of possible implementations of the first aspect to the fourth aspect.

For beneficial effects brought by the fifth aspect to the fourteenth aspect, refer to descriptions of beneficial effects in the first aspect to the fourth aspect. Details are not described herein again.

### BRIEF DESCRIPTION OF DRAWINGS

FIG. 1 is a diagram of a system architecture to which this application is applicable;
FIG. 2 is an interaction flowchart of a data scheduling method;
FIG. 3 is a diagram of scheduling data in an uplink-downlink slot configuration;
FIG. 4 is an interaction flowchart of a communication method according to an embodiment of this application;
FIG. 5 is an interaction flowchart of another communication method according to an embodiment of this application;
FIG. 6 is a diagram of a communication apparatus according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of still another communication apparatus according to an embodiment of this application.

### DESCRIPTION OF EMBODIMENTS

The following describes technical solutions in embodiments of this application with reference to accompanying drawings.

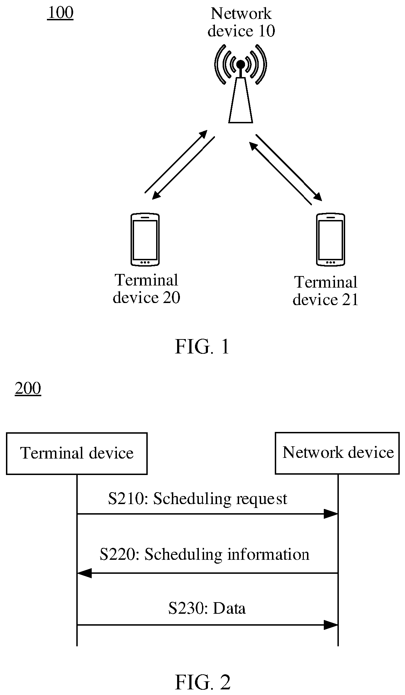

FIG. 1 is a diagram of a system architecture to which this application is applicable. A communication system 100 shown in FIG. 1 includes a network device 10 and at least one terminal device, for example, a terminal device 20 and a terminal device 21. In the communication system, the terminal device 20 and the terminal device 21 may send uplink data/signals/information to the network device 10; and the network device 10 may send downlink data/signals/information to at least one of the terminal device 20 and the terminal device 21. In addition, the terminal device 20 and the terminal device 21 may alternatively perform transmission of data/signals/information.

It should be understood that, FIG. 1 is merely a simplified diagram of an example for ease of understanding. The communication system 100 may further include another network device or may further include another terminal device. This is not shown in FIG. 1.

The foregoing network architecture used in embodiments of this application is merely an example for description, and the network architecture used in embodiments of this application is not limited thereto. Any network architecture that can implement functions of the foregoing devices is applicable to embodiments of this application.

The technical solutions in embodiments of this application may be applied to various communication systems, such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a fifth generation (5th generation, 5G) system, a new radio (new radio, NR) system, and another evolved communication system.

The technical solutions provided in this application may be further applied to a future communication system, for example, a sixth generation mobile communication system. This is not limited in this application.

The technical solutions provided in this application may be further applied to machine type communication (machine type communication, MTC), a long term evolution technology for machine-to-machine communication (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as a vehicle-to-everything (vehicle to X, V2X, where X may stand for everything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

A terminal device in embodiments of this application may be a wireless terminal device that can receive scheduling information and indication information from a network device. The terminal device may be a device that provides voice and/or data connectivity for a user, a handheld device with a wireless connection function, or another processing device connected to a wireless modem.

The terminal device may also be referred to as a terminal, an access terminal, a user unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing voice/data connectivity for a user), for example, a handheld device or a vehicle-mounted device having the wireless connection function. The terminal in embodiments of this application may be a mobile phone (mobile phone), a tablet computer (pad), a computer with a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control (industrial control), a wireless terminal (for example, a vehicle-mounted device, a vehicle device, an in-vehicle module, or a vehicle) in the internet of vehicles, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like. It may be understood that, all or a part of functions of the terminal device in this application may alternatively be implemented via a software function running on hardware, or may be implemented via a virtualization function instantiated on a platform (for example, a cloud platform).

The wearable device may also be referred to as a wearable intelligent device, and is a general term for wearable devices, such as glasses, gloves, watches, clothing, and shoes, that are developed by intelligently designing daily wear by applying a wearable technology. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes full-featured and large-sized devices that can implement complete or partial functions without depending on a smartphone, such as a smart watch or smart glasses, and devices, such as various smart bands or smart jewelry for monitoring physical signs, that focus on only a type of application function and need to be used together with another device, for example, a smartphone.

The network device in embodiments of this application may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), a server, a wearable device, a vehicle-mounted device, an access point (access point, AP) in a Wi-Fi system, a wireless relay node, a wireless backhaul node, a transmission point (transmission point, TP), a transmission reception point (transmission reception point, TRP), or the like, or may be a gNB in a 5G system such as an NR system, a transmission point (TRP or TP), one or a group of antenna panels (including a plurality of antenna panels) of a base station in a 5G system, or may be a network node forming a gNB or a transmission point, such as a baseband unit (BBU) or a distributed unit (distributed unit, DU). The base station may be a macro base station, a micro base station, a pico base station, a small cell, a relay station, a balloon station, or the like. It may be understood that, all or a part of functions of the network device in this application may alternatively be implemented via a software function running on hardware, or may be implemented via a virtualization function instantiated on a platform (for example, a cloud platform).

In some deployments, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements a part of physical layer processing functions, radio frequency processing, and functions related to an active antenna. Information at the RRC layer is generated by the CU, and is finally changed to information at the PHY layer through encapsulation at the PHY layer of the DU, or is changed from information at the PHY layer. Therefore, in this architecture, higher layer signaling, for example, RRC layer signaling, may also be considered to be sent by the DU, or sent by the DU and the AAU. It may be understood that, the network device may be a device including one or more of a CU node, a DU node, and an AAU node. In addition, the CU may be divided into a network device in an access network (radio access network, RAN), or the CU may be divided into a network device in a core network (core network, CN). This is not limited in this application.

Nowadays, technologies related to multimedia services (for example, CG and XR services) are continuously advanced and improved. To enhance visual effects and interactive experience, the services of such a type have a strict network delay requirement. For example, in a remote control system, to ensure high fidelity of tactile and a remote operation, a sampling rate of tactile information should not be lower than one kHz, and a transmission delay of each sample is required to reach 5 ms. In some multimedia services with increasingly strict transmission delay requirements, completing data transmission within delay budgets is a problem that needs to be considered. A delay budget of data may be determined based on a transmission delay requirement of a service.

FIG. 2 is an interaction flowchart of a data scheduling method. The method 200 shown in FIG. 2 may include the following steps.

S210: A terminal device sends a scheduling request (scheduling request, SR) to a network device, where the scheduling request is for requesting a resource for scheduling data.

Correspondingly, the network device receives the scheduling request from the terminal device.

For example, when the terminal device needs to send uplink data, the terminal device sends the scheduling request to the network device, to request a resource for sending the uplink data.

The scheduling request may be carried on a physical uplink control channel (physical uplink control channel, PUCCH). For example, the scheduling request may include 1-bit information for notifying the network device whether uplink data transmission exists.

Sending periodicities and sending offsets (for example, slot offsets) of scheduling requests on different logical channels (logical channels, LCHs) may be the same, or may be different. In addition, the different logical channels may be separately configured.

For example, the scheduling request may be carried in a PUCCH format (format) 0 or a PUCCH format 1.

The PUCCH format 0 may be further used for sending a hybrid automatic repeat request (hybrid automatic repeat request, HARQ) ACK/NACK (acknowledgement/negative acknowledgement) feedback. Information sent in the PUCCH format 0 may include one bit or two bits (where the two bits correspond to a case in which a scheduled physical downlink shared channel (physical downlink shared channel, PDSCH) includes two codewords). The PUCCH format 0 may occupy one resource block in frequency domain, and may occupy one or two symbols in time domain.

The PUCCH format 0 can be generated based on a ZC (Zadoff-Chu) sequence. Information carried in the ZC sequence may be indicated via a final value of a sequence cyclic shift. The final value of the sequence cyclic shift may be determined based on a value *m_{cs}* of the sequence cyclic shift.

For example, when the sent information is HARQ-ACK information, *m_{cs}* corresponding to a piece of HARQ-ACK information may be determined based on a correspondence between the HARQ-ACK information and the sequence cyclic shift of the PUCCH format 0.

When the sent HARQ-ACK information is one bit, a correspondence between a value of the HARQ-ACK information bit (namely, a HARQ-ACK value) and the sequence cyclic shift of the PUCCH format 0 may be shown in Table 1, that is, *m_{cs}* corresponding to the HARQ-ACK value may be determined based on the correspondence shown in Table 1.

**Table 1**

| HARQ-ACK value | 0 | 1 |
|---|---|---|
| Sequence cyclic shift | *m_{cs}* =0 | *m_{cs}*=6 |

When the sent HARQ-ACK information is two bits, a correspondence between a value of the HARQ-ACK information bits and the sequence cyclic shift of the PUCCH format 0 may be shown in Table 2, that is, *m_{cs}* corresponding to the HARQ-ACK value may be determined based on the correspondence shown in Table 2.

**Table 2**

| HARQ-ACK value | {0, 0} | {0, 1} | {1, 1} | {1, 0} |
|---|---|---|---|---|
| Sequence cyclic shift | *m_{cs}* =0 | *m_{cs}* =3 | *m_{cs}* =6 | *m_{cs}* =9 |

In an example of Table 2, when the HARQ-ACK value is {0, 1}, it may be determined that *m_{cs}* =3. Further, the final value of the sequence cyclic shift of the PUCCH format 0 carrying the HARQ-ACK value may be determined based on *m_{cs}* that is equal to 3.

The SR may also be carried in the PUCCH format 0. That is, the HARQ-ACK information and the scheduling request SR are multiplexed. In other words, the SR and the HARQ-ACK information may be sent simultaneously. When the HARQ-ACK information and the SR are multiplexed, the SR is a positive (positive) request (that is, to notify the network device that data transmission exists), and the terminal device may also indicate the HARQ-ACK information and the positive SR in a cyclic shift manner.

When the sent HARQ-ACK information and the positive SR are one bit, a correspondence between values of the HARQ-ACK information bit and the positive SR and the sequence cyclic shift of the PUCCH format 0 may be shown in Table 3.

**Table 3**

| HARQ-ACK value | 0 | 1 |
|---|---|---|
| Sequence cyclic shift | *m_{cs}* =3 | *m_{cs}* =9 |

When the sent HARQ-ACK information bit and the positive SR are two bits, a correspondence between values of the HARQ-ACK information bit and the positive SR and the sequence cyclic shift of the PUCCH format 0 may be shown in Table 4.

**Table 4**

| HARQ-ACK value | {0, 0} | {0, 1} | {1, 1} | {1, 0} |
|---|---|---|---|---|
| Sequence cyclic shift | *m_{cs}* =1 | *m_{cs}* =4 | *m_{cs}* =7 | *m_{cs}* =10 |

The value of the positive SR is not shown in Table 3 and Table 4, because the positive SR is implicitly indicated and actually does not occupy an information bit. To be specific, when a value of *m_{cs}* is a value in Table 3 and Table 4, the HARQ-ACK value also indicates the positive SR in addition to the HARQ-ACK information.

It should be noted that, because a sending resource of the HARQ-ACK information or the HARQ-ACK information and the positive SR is configured by the network device, when identifying *m_{cs}* that is equal to 3 or 9, the network device may determine whether to interpret, based on Table 2, the HARQ-ACK information indicated by the two bits, or to interpret, based on Table 3, the HARQ-ACK information and the positive SR that are indicated by the foregoing one bit.

In an example of Table 4, when the HARQ-ACK value is {0, 1}, it may be determined that *m_{cs}* =4 based on Table 4. Further, the final value of the sequence cyclic shift of the PUCCH format 0 sequence carrying the HARQ-ACK information and the positive SR may be determined based on *m_{cs}* that is equal to 4.

S220: The network device sends scheduling information to the terminal device.

Correspondingly, the terminal device receives the scheduling information from the network device.

For example, in response to the SR sent by the terminal device, the network device sends the scheduling information to the terminal device. The scheduling information may include physical uplink shared channel (physical uplink shared channel, PUSCH) resource information.

The scheduling information may be carried on a physical downlink control channel (physical downlink control channel, PDCCH). For example, the scheduling information is sent to the terminal device in a downlink control information (downlink control information, DCI) format (format) 0_0 or a downlink control information format 0_1.

Because the network device does not know a data amount of the uplink data to be sent by the terminal device, the network device may perform scheduling on the terminal device based on a small and fixed data amount.

Optionally, if the terminal device does not receive the scheduling information from the network device, the terminal device may further continue to send the SR.

S230: The terminal device sends the data to the network device.

Correspondingly, the network device receives the data from the terminal device.

For example, after receiving the scheduling information from the network device, the terminal device sends the data to the network device based on the scheduling information. For example, the scheduling information allocated by the network device may include information about a PUSCH resource, and the terminal device may send the data on a PUSCH resource.

The data may include information about a buffer status report (buffer status report, BSR), and the BSR notifies the network device of how much data still needs to be sent. For example, if the BSR is greater than 0, the network device may continue to perform scheduling on the terminal device. In other words, the network device may continue to send the scheduling information to the terminal device through the PDCCH, so that the terminal device continues to transmit the data on the PUSCH resource indicated by the scheduling information.

In a time division duplex (time division duplex, TDD) system, due to a quantity ratio and a sequence of uplink slots and downlink slots, the network device can receive the SR only in the uplink slot. However, a moment when the data of the terminal device arrives or a moment when the terminal device obtains the data may be earlier than a moment corresponding to the uplink slot. If the data scheduling solution in the method 200 is used, the network device may fail to perceive the accurate moment when the terminal device obtains the data. When the network device cannot perceive the accurate moment when the terminal device obtains the data, scheduling time of the data on an air interface may exceed a delay budget of the data.

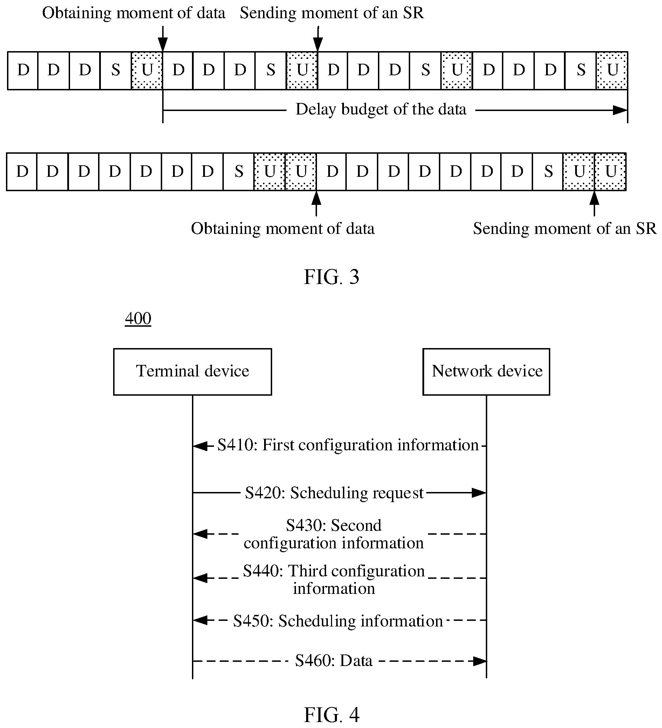

For example, as shown in FIG. 3, when a TDD slot configuration is DDDSU, if the network device uses a sending moment of the SR as an obtaining moment of the data, an error can be five slots from an actual obtaining moment of the data. If the system uses a 15 kHz subcarrier spacing (subcarrier spacing, SCS), and one slot is 1 ms, the error can be 5 ms. When a TDD slot configuration is DDDDD DDSUU, if the network device uses a sending moment of the SR as an obtaining moment of the data, an error can be nine slots from an actual obtaining moment of the data. If each slot is 1 ms, the error can be 9 ms.

D is a downlink slot, U is an uplink slot, S represents a special slot (special), and the special slot may include a symbol used for uplink transmission and a symbol used for downlink transmission.

For example, the TDD slot configuration is DDDSU. It is assumed that the delay budget of the data is 15 ms (where one slot is 1 ms), and the actual obtaining moment of the data is an end moment of a 1^{st} uplink slot. The data may be invalid after a 4^{th} uplink slot shown in FIG. 3 ends. If the network device uses an end moment of a 2^{nd} uplink slot for sending the SR as the obtaining moment of the data, the network device completes, based on the delay budget of the data, scheduling and transmission of the data within 15 ms after the 2^{nd} uplink slot. However, the data transmitted after the 4^{th} uplink slot may be invalid.

It should be noted that, in embodiments of this application, the delay budget of the data may be a packet delay budget (packet delay budget, PDB) of the data. The PDB may be a maximum value of a transmission delay allowed in a process of transmitting a data packet between a user plane function (user plane function, UPF) network element and a terminal device. In other words, if the transmission delay of the data packet transmitted between the UPF and the terminal device exceeds the PDB, the data packet may be useless for a receive end.

Alternatively, the PDB in embodiments of this application may be a maximum value of a transmission delay allowed for data transmission between the network device (for example, a base station) and the terminal device.

In embodiments of this application, the obtaining moment of the data may be understood as the moment when the terminal device obtains the data. The moment when the data is obtained may be understood as a moment when the data is delivered to/arrivals at a protocol layer (for example, a MAC layer, an RLC layer, or a PDCP layer). For example, the obtaining moment of the data is a moment when a MAC entity, an RLC entity, or a PDCP entity obtains the data. Alternatively, the obtaining moment of the data may be represented as a slot number, a subframe number, or a frame number of the data obtained by the MAC entity, the RLC entity, or the PDCP entity. The obtaining moment of the data may also be understood as a moment when the terminal device is ready to send the data. This is not limited in this application.

In conclusion, if a data obtaining status (for example, the obtaining moment of the data and the data amount) of the terminal device is unknown, scheduling performed on the terminal device by the network device may have a large delay, or the network device may fail to complete data transmission within the delay budget of the data.

In view of this, embodiments of this application provide a communication method and a communication apparatus, to reduce a data transmission delay of the terminal device, complete data transmission within the delay budget of the data, and improve communication performance.

FIG. 4 is a schematic flowchart of a communication method according to an embodiment of this application. In an interaction flowchart in this application, a corresponding method is illustrated by using an example in which a network device and a terminal device are used as execution bodies of an interaction example. However, the execution bodies of the interaction example are not limited in this application. For example, the network device in the figure may alternatively be a chip, a chip system, or a processor that supports the network device in implementing the corresponding method, or may be a logical module or software that can implement all or a part of functions of the network device. The terminal device in the figure may alternatively be a chip, a chip system, or a processor that supports the terminal device in implementing the corresponding method, or may be a logical module or software that can implement all or a part of functions of the terminal device. The method may include at least the following steps.

S410: The network device sends first configuration information to the terminal device.

Correspondingly, the terminal device receives the first configuration information from the network device.

The first configuration information may be for configuring a first threshold and a second threshold. The first threshold may be a threshold of a remaining delay budget of data or a threshold of buffer duration of the data. The second threshold may be a threshold of a data amount of the data or a threshold of a buffer size of the terminal device.

The remaining delay budget of the data may be an upper limit of remaining duration for completing transmission of the data. The remaining delay budget of the data is related to a delay budget of the data and buffer duration of the data. The buffer duration of the data may be duration between an obtaining moment of the data and a sending moment of the data. The sending moment of the data may be a moment when a scheduling request is sent. Specifically, the remaining delay budget of the data may be a difference between the delay budget of the data and the buffer duration of the data.

It should be noted that, the sending moment of the scheduling request is understood as a triggering moment of the scheduling request or an actual sending moment of the scheduling request. The triggering moment of the scheduling request may be earlier than the actual sending moment of the scheduling request. A time interval between the triggering moment of the scheduling request and the actual sending moment of the scheduling request may be very small, for example, may be less than one millisecond (ms). This is not limited in this application.

It should be further noted that, in a TDD system, a quantity and an arrangement sequence of uplink time units (for example, slots) and downlink time units (for example, slots) may be preconfigured. Therefore, before sending the scheduling request, the terminal device may determine the moment when the scheduling request is sent. As shown in FIG. 3, when a TDD slot configuration is DDDSU, the obtaining moment of the data is an end moment of a 1^{st} uplink slot, and the terminal device may determine to send the scheduling request in a next uplink slot.

In this application, the time unit may be a slot, a frame, a subframe, a time domain symbol, or the like. This is not limited.

It may be understood that, the remaining delay budget of the data and the buffer duration of the data may be replaced with each other. To be specific, when the delay budget of the data is known, the buffer duration of the data may be determined based on the remaining delay budget of the data, or the remaining delay budget of the data may be determined based on the buffer duration of the data. For example, the delay budget of the data is 20 ms, the obtaining moment of the data is a 3^{rd} ms, and a start moment of the uplink slot used for sending the scheduling request is an 8^{th} ms, in other words, the buffer duration of the data is 5 ms. It may be determined, based on the delay budget of the data and the buffer duration of the data, that the remaining delay budget of the data is 15 ms.

The data amount of the data may also be replaced with the buffer size of the terminal device. For example, the data amount of the data may be 1000 bytes (Bytes), in other words, the buffer size of the terminal device may be 1000 bytes.

The following mainly describes the method in this embodiment of this application by using an example in which the first threshold is the threshold of the remaining delay budget of the data and the second threshold is the threshold of the data amount of the data. However, this does not constitute a limitation on this application.

For example, the first configuration information may be a field in scheduling request configuration (SchedulingRequestToAddMod) information or scheduling request resource configuration (SchedulingRequestResourceConfig) information.

For example, the first configuration information is the field in SchedulingRequestToAddMod. The first configuration information may include a remaining-Threshold field indicating the first threshold and a BufferSize-Threshold field indicating the second threshold:

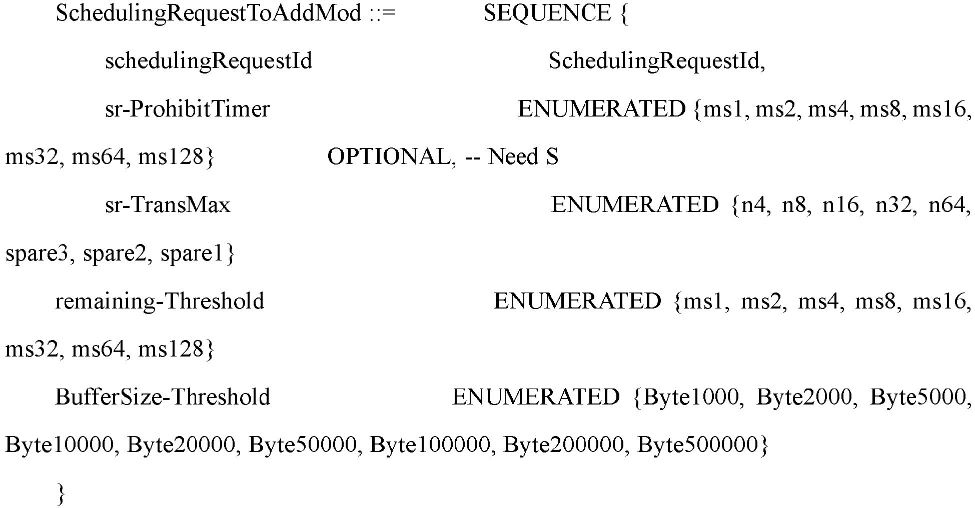

ms1 indicates one millisecond (ms), Byte1000 indicates 1000 bytes (Bytes), and so on. It should be understood that, values of the first threshold and the second threshold are merely examples, and the values of the first threshold and the second threshold may be configured based on an actual situation. This is not limited.

S420: The terminal device sends the scheduling request to the network device.

Correspondingly, the network device receives the scheduling request from the terminal device.

The scheduling request may be for requesting a resource for scheduling the data. The scheduling request may indicate at least one of a value relationship between the remaining delay budget of the data and the first threshold or a value relationship between the data amount of the data and the second threshold.

For example, after obtaining the data, the terminal device determines the obtaining moment of the data and the data amount of the data. The terminal device may determine the remaining delay budget of the data based on the delay budget of the data and the sending moment of the scheduling request. The terminal device determines the value relationship between the remaining delay budget of the data and the first threshold based on the first threshold. The terminal device may determine the value relationship between the data amount of the data and the second threshold based on the second threshold.

The scheduling request may be carried on a PUCCH, for example, may be carried in a PUCCH format 0 or a PUCCH format 1. The scheduling request may include information (denoted as first information for ease of description) indicating at least one of the value relationship between the remaining delay budget of the data and the first threshold or the value relationship between the data amount of the data and the second threshold.

The first information may be 2-bit information, and a value and a meaning of the 2-bit information may be preconfigured in a protocol. The value and the meaning of the 2-bit information may be shown in any one of Table 5 to Table 8.

**Table 5**

| Bit information | Meaning |
|---|---|
| '00' | The scheduling request does not exist. |
| '01' | The data amount of the data is less than the second threshold. |
| '10' | The data amount of the data is greater than or equal to the second threshold, and the remaining delay budget of the data is greater than or equal to the first threshold. |
| '11' | The data amount of the data is greater than or equal to the second threshold, and the remaining delay budget of the data is less than the first threshold. |

For example, according to Table 5, the terminal device may first determine the data amount of the data. If there is no data or a buffer of the terminal device is empty, the value of the 2-bit information may be "00". If the data amount of the data is less than the second threshold, the value of the 2-bit information may be "01". When the terminal device determines that the data amount of the data is greater than or equal to the second threshold, the terminal device may determine the remaining delay budget of the data. If the remaining delay budget of the data is greater than or equal to the first threshold, the value of the 2-bit information may be "10". If the remaining delay budget of the data is less than the first threshold, the value of the 2-bit information may be "11".

**Table 6**

| Bit information | Meaning |
|---|---|
| '00' | The scheduling request does not exist or a buffer of the terminal device is empty. |
| '01' | The remaining delay budget of the data is greater than or equal to the first threshold. |
| '10' | The remaining delay budget of the data is less than the first threshold, and the data amount of the data is less than the second threshold. |
| '11' | The remaining delay budget of the data is less than the first threshold, and the data amount of the data is greater than or equal to the second threshold. |

For example, according to Table 6, the terminal device may first determine whether there is data or whether the buffer of the terminal device is empty. If there is no data or the buffer of the terminal device is empty, the value of the 2-bit information may be "00". When the terminal device determines that there is data or the buffer of the terminal device is not empty, the terminal device may determine the remaining delay budget of the data. If the remaining delay budget of the data is greater than or equal to the first threshold, the value of the 2-bit information may be "01". When the terminal device determines that the remaining delay budget of the data is less than the first threshold, the terminal device may determine the data amount of the data. If the data amount of the data is less than the second threshold, the value of the 2-bit information may be "10". If the data amount of the data is greater than or equal to the second threshold, the value of the 2-bit information may be "11".

**Table 7**

| Bit information | Meaning |
|---|---|
| '00' | The remaining delay budget of the data is greater than or equal to the first threshold, and the data amount of the data is less than the second threshold. |
| '01' | The remaining delay budget of the data is greater than or equal to the first threshold, and the data amount of the data is greater than or equal to the second threshold. |
| '10' | The remaining delay budget of the data is less than the first threshold, and the data amount of the data is less than the second threshold. |
| '11' | The remaining delay budget of the data is less than the first threshold, and the data amount of the data is greater than or equal to the second threshold. |

For example, according to Table 7, the terminal device may determine the remaining delay budget of the data and the data amount of the data. The terminal device determines the value of the bit information based on the value relationship between the remaining delay budget of the data and the first threshold and the value relationship between the data amount of the data and the second threshold.

**Table 8**

| Bit information | Meaning |
|---|---|
| '00' | The remaining delay budget of the data is a 1^{st} value in a remaining delay budget list, and the data amount of the data is a 1^{st} value in a data amount list. |
| '01' | The remaining delay budget of the data is a 1^{st} value in a remaining delay budget list, and the data amount of the data is a 2^{nd} value in a data amount list. |
| '10' | The remaining delay budget of the data is a 2^{nd} value in a remaining delay budget list, and the data amount of the data is a 1^{st} value in a data amount list. |
| '11' | The remaining delay budget of the data is a 2^{nd} value in a remaining delay budget list, and the data amount of the data is a 2^{nd} value in a data amount list. |

For example, according to Table 8, the terminal device may determine the remaining delay budget of the data and the data amount of the data, and determine the value of the 2-bit information depending on whether the remaining delay budget of the data is the 1^{st} value or the 2^{nd} value in the remaining delay budget list, and the data amount of the data is the 1^{st} value or the 2^{nd} value in the data amount list. The remaining delay budget list and the data amount list may be configured by the network device (referring to descriptions of a third configuration).

It may be understood that, Table 5 to Table 8 are merely examples, and do not constitute a limitation on this application. For example, in Table 5 to Table 8, meanings indicated by the bit information may be replaced with each other. For another example, the information that is in the scheduling request and that indicates at least one of the value relationship between the remaining delay budget of the data and the first threshold or the value relationship between the data amount of the data and the second threshold may be greater than two bits. The bit information greater than two bits may indicate any combination of the meanings in Table 5 to Table 8. For still another example, any one or two bit values in Table 5 to Table 8 may not indicate any meaning, or the meaning indicated by the bit information is reserved.

Further, when the scheduling request is carried in the PUCCH format 0, and the information that is in the scheduling request and that indicates at least one of the value relationship between the remaining delay budget of the data and the first threshold or the value relationship between the data amount of the data and the second threshold includes two bits, a correspondence between a value of the 2-bit information and a value of a sequence cyclic shift may be shown in Table 9.

**Table 9**

| Bit information | {0, 0} | {0, 1 } | {1, 1} | {1, 0} |
|---|---|---|---|---|
| Sequence cyclic shift | *m _{cs} =2* | *m_{cs}* =5 | *m_{cs}* =8 | *m_{cs}* =11 |

For example, when the value of the bit information is {0, 1}, the value of the sequence cyclic shift of the PUCCH format 0 is 5. The network device may interpret, based on *m_{cs}* that is equal to 5, the value relationship between the remaining delay budget of the data and the first threshold and/or the value relationship between the data amount of the data and the second threshold.

It should be understood that, the value of the bit information and the value of the sequence cyclic shift are merely examples, and the correspondence between the value of the bit information and the value of the sequence cyclic shift is also merely an example. A difference between values of *m_{cs}* corresponding to the bit information {0, 0}, {0, 1}, {1, 1}, and {1, 0} may be 3. The values of *m_{cs}* may alternatively be 0, 3, 6, and 9, or 2, 4, 7, and 11.

Based on the foregoing solution, when the threshold (the first threshold) of the remaining delay budget of the data and the data amount (the second threshold) of the data are configured for the terminal device, the terminal device may send, to the network device, the scheduling request indicating the value relationship between the remaining delay budget of the data and the first threshold and/or the value relationship between the data amount of the data and the second threshold, so that the network device can schedule, based on the scheduling request, the resource for transmission of the data, to reduce a data transmission delay and improve communication performance.

Optionally, the method 400 may further include S430: The network device sends second configuration information to the terminal device.

Correspondingly, the terminal device receives the second configuration information from the network device.

The second configuration information may be for configuring sending of the scheduling request. For example, the second configuration information may be another field in the SchedulingRequestToAddMod information, for example, may be an enhanced SR (enhanced-sr) field.

That is, the enhanced-sr field may be for configuring sending of the scheduling request. For example, when the enhanced-sr field is set to true (or another agreed value), this indicates that the scheduling request that indicates at least one of the value relationship between the remaining delay budget of the data and the first threshold or the value relationship between the data amount of the data and the second threshold and that is sent by the terminal device is configured.

It should be understood that, the foregoing configuration information and a field name are merely examples. This is not limited in this application.

An example of a configuration including the enhanced-sr field is as follows:

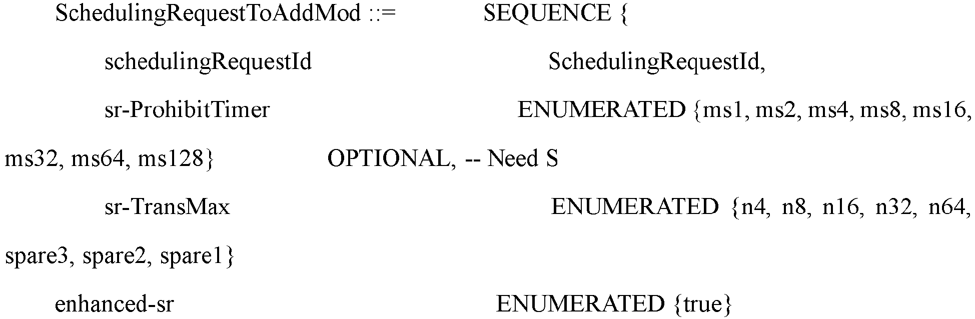

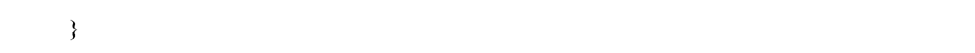

Optionally, if the enhanced-sr field is set to false, the scheduling request may not indicate at least one of the value relationship between the remaining delay budget of the data and the first threshold or the value relationship between the data amount of the data and the second threshold. In this case, for the scheduling request, refer to a conventional technology.

Optionally, the method 400 may further include S440: The network device sends third configuration information to the terminal device.

Correspondingly, the terminal device receives the third configuration information from the network device.

The third configuration information is for configuring the remaining delay budget list and the data amount list. The remaining delay budget list may include at least one value of the remaining delay budget of the data, and the data amount list may include at least one value of the data amount of the data.

For example, the third configuration information may be a remaining delay list (sr-RemainingPDBList) field and a buffer size (sr-BufferSizeList) field in the SchedulingRequestToAddMod information.

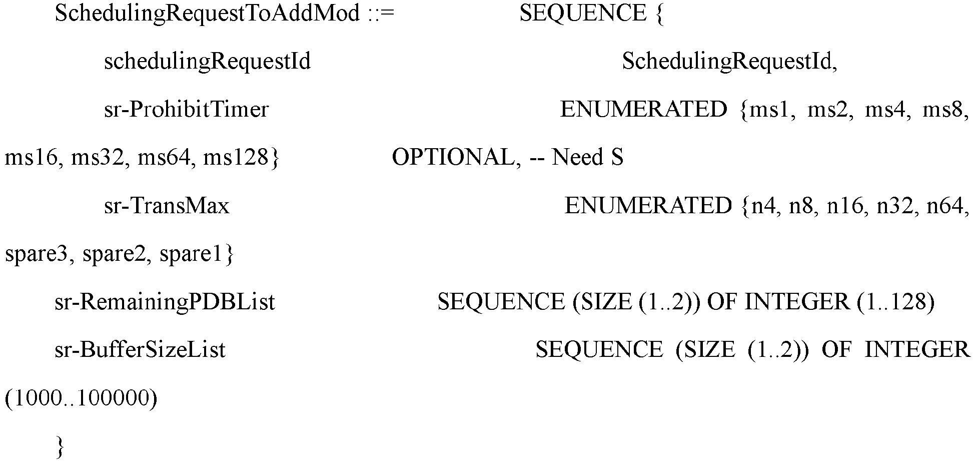

At least one value and at most four values may be configured in sr-RemainingPDBList and sr-BufferSizeList. A range of each value in sr-RemainingPDBList is greater than or equal to 0 and less than or equal to 128. A range of each value in sr-BufferSizeList is greater than or equal to 1000 and less than or equal to 1000.

In this application, when different configuration information (for example, the first configuration information, the second configuration information, and the third configuration information) is different information elements in a same configuration (for example, SchedulingRequestToAddMod), the terminal device may obtain the different configuration information by receiving one configuration, or the terminal device may separately obtain the different configuration information by receiving different configurations. This is not limited.

Optionally, the method 400 further includes the following step.

S450: The network device sends scheduling information to the terminal device.

Correspondingly, the terminal device receives the scheduling information from the network device.

The scheduling information may be for scheduling the data. For example, the network device may determine the scheduling information based on the scheduling request. The scheduling information may include PUSCH resource information. The scheduling information may be carried on a PDCCH. For example, the scheduling information is sent to the terminal device in a DCI format 0_0 or a DCI format 0_1.

Optionally, if the terminal device does not receive the scheduling information, the terminal device may further continue to send the scheduling request to the network device.

Optionally, the method 400 further includes the following step.

S460: The terminal device sends the data to the network device.

Correspondingly, the network device receives the data from the terminal device.

For example, the data is carried on a PUSCH resource, and the PUSCH resource is indicated by PUSCH resource indication information. The data may further include BSR information, and the BSR information notifies the network device of how much data needs to be sent. For example, if a BSR is greater than 0, the network device may continue to configure the resource for transmission of the data for the terminal device, so that the terminal device continues to transmit remaining data on the configured resource.

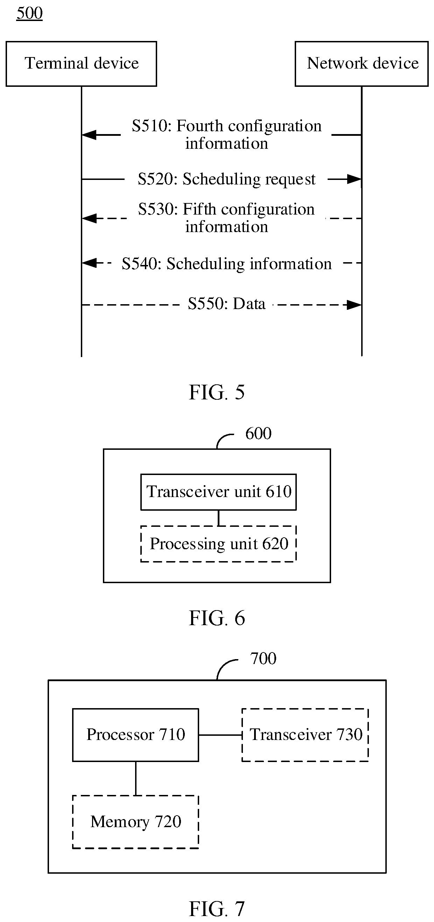

FIG. 5 is a schematic flowchart of another communication method according to an embodiment of this application. The method includes at least the following steps.

S510: A network device sends fourth configuration information to a terminal device.

Correspondingly, the terminal device receives the fourth configuration information from the network device.

The fourth configuration information may be for configuring sending of a scheduling request, where the scheduling request indicates a ratio of a data amount of data to a remaining delay budget of the data. The ratio of the data amount to the remaining delay budget of the data may also be referred to as a required rate of the data.

For example, the fifth configuration information may be a field in SchedulingRequestToAddMod information, for example, may be an enhanced SR (enhanced-sr) field.

The enhanced-sr field may be for configuring sending of the scheduling request. For example, when the enhanced-sr field is set to true (or another agreed value), this indicates that the required rate of the data sent by the terminal device is configured.

It should be understood that, the foregoing configuration information and a field name are merely examples. This is not limited in this application.

An example of a configuration including the enhanced-sr field is as follows:

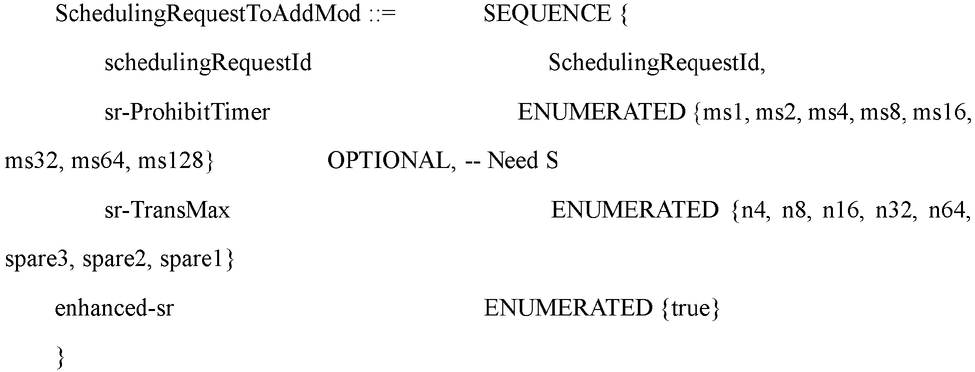

Optionally, if the enhanced-sr field is set to false, the scheduling request may not indicate the required rate of the data.

S520: The terminal device sends the scheduling request to the network device.

Correspondingly, the network device receives the scheduling request from the terminal device.

The scheduling request may be for requesting a resource for scheduling the data. The scheduling request may indicate the ratio of the data amount of the data to the remaining delay budget of the data. For ease of description, the ratio of the data amount of the data to the remaining delay budget of the data is referred to as the required rate of the data.

For example, after obtaining the data, the terminal device may determine an obtaining moment of the data and the data amount of the data. The terminal device may determine the remaining delay budget of the data based on a delay budget of the data and a sending moment of the scheduling request. The terminal device determines the required rate of the data based on the data amount of the data and the remaining delay budget of the data.

The scheduling request may be carried on a PUCCH, for example, may be carried in a PUCCH format 0 or a PUCCH format 1. The scheduling request may include information (denoted as second information) indicating the required rate of the data.

The second information may be 2-bit information, and a value and a meaning of the 2-bit information may be preconfigured in a protocol. The value and the meaning of the 2-bit information may be shown in either of Table 10 and Table 11.

**Table 10**

| Bit information | Meaning |
|---|---|
| '00' | The required rate of the data is a 1^{st} value in a required rate list. |
| '01' | The required rate of the data is a 2^{nd} value in a required rate list. |
| '10' | The required rate of the data is a 3^{rd} value in a required rate list. |
| '11' | The required rate of the data is a 4^{th} value in a required rate list. |

The terminal device may determine, based on the required rate of the data and Table 10, the value of the 2-bit information that is in the scheduling request and that indicates the required rate of the data. For example, if the terminal device determines that the required rate of the data is the 1^{st} value in the required rate list, the value of the 2-bit information is "00".

**Table 11**

| Bit information | Meaning |
|---|---|
| '00' | The required rate of the data is less than a 1^{st} value in a required rate list. |
| '01' | The required rate of the data is greater than or equal to a 1^{st} value in a required rate list and less than a 2^{nd} value in the required rate list. |
| '10' | The required rate of the data is greater than or equal to a 2^{nd} value in a required rate list and less than a 3^{rd} value in the required rate list. |
| '11' | The required rate of the data is greater than or equal to a 3^{rd} value in a required rate list and less than a 4^{th} value in the required rate list. |

The terminal device may determine, based on the required rate of the data and Table 11, the value of the 2-bit information that is in the scheduling request and that indicates the required rate of the data. For example, if the terminal device determines that the required rate of the data is R1, where R1 is greater than the 1^{st} value in the required rate list and less than the 2^{nd} value in the required rate list, the value of the 2-bit information is "01".

For the required rate list, refer to descriptions of a fourth configuration.

It should be understood that, the value and the meaning of the bit information in Table 10 and Table 11 are merely examples. This is not limited in this application. The information indicating the required rate of the data may be greater than two bits. In other words, the network device may indicate more values of the required rate or a value range of the required rate.

Further, when the scheduling request is carried in the PUCCH format 0, and the information that is in the scheduling request and that indicates the required rate of the data includes two bits, for a correspondence between a value of the 2-bit information and a value of a sequence cyclic shift, refer to Table 9. Details are not described again.

Optionally, the method 500 may further include S530: The network device sends fifth configuration information to the terminal device.

Correspondingly, the terminal device receives the fifth configuration information from the network device. The fifth configuration information may be for configuring at least one required rate.

For example, the fifth configuration information may be a field in the SchedulingRequestToAddMod information, for example, may be a required rate list (RequiredDataRateList) field.

At least one value is configured in the RequiredDataRateList field, and each of the at least one value may indicate a required rate.

A quantity of values that are of the required rate and that are configured in RequiredDataRateList and a value range of each of the values may be predefined. An example of predefinition in RequiredDatarateList is as follows.

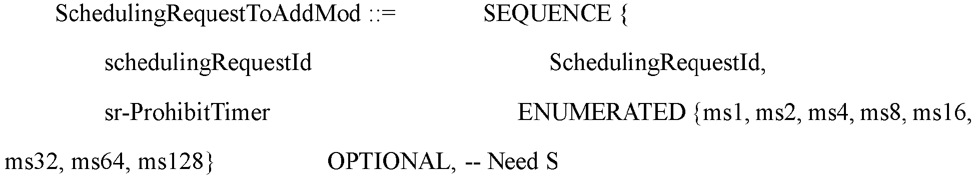

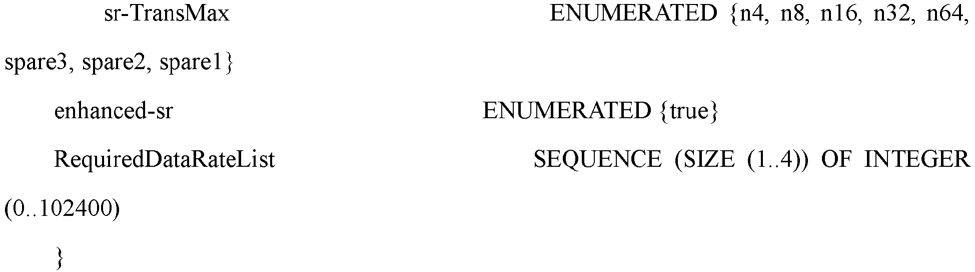

At least one value and at most four values may be configured in RequiredDataRateList. A range of each value is greater than or equal to 0 and less than or equal to 102400. The foregoing values are merely examples. Another quantity and range of values may be alternatively configured in RequiredDataRateList. This is not limited.

It may be understood that, if N values are configured in the fourth configuration information, a quantity of bits included in the information indicating the required rate of the data is ceil(log2(N)). ceil indicates a round-up function, and N is a positive integer.

In this application, when different configuration information (for example, the fourth configuration information and the fifth configuration information) is different information elements in a same configuration (for example, SchedulingRequestToAddMod), the terminal device may obtain the different configuration information by receiving one configuration, that is, S510 and S530 may be simultaneously performed, or the terminal device may separately obtain the different configuration information by receiving different configurations, that is, steps S510 and S530 may be separately performed. This is not limited.

Optionally, the method 500 further includes S540: The network device sends scheduling information to the terminal device, where the scheduling information is for scheduling the data.

Correspondingly, the terminal device receives the scheduling information from the network device.

For this step, refer to descriptions in S450.

Optionally, the method 500 further includes S550: The terminal device sends the data to the network device.

Correspondingly, the network device receives the data from the terminal device.

For this step, refer to descriptions in S460.

Steps in dashed lines in the foregoing flowcharts are optional steps, and a sequence of the steps is determined based on internal logic of the methods. Sequence numbers shown in the foregoing flowcharts are merely examples, and do not limit the sequence of the steps in this application.

It should be further understood that, the methods provided in embodiments of this application may be used independently, or may be used in combination. This is not limited in this application. Various implementations provided in embodiments of this application may be used independently, or may be used in combination. This is not limited in this application. Various examples provided in embodiments of this application may be used independently, or may be used in combination. This is not limited in this application.

In embodiments of this application, the term "at least one" may refer to one or more, and "a plurality of" may refer to two or more. The character "/" generally indicates an "or" relationship between associated objects. At least one of the following items (pieces) or a similar expression thereof indicates any combination of these items, including a single item (piece) or any combination of a plurality of items (pieces). At least one of a, b, or c may indicate a, b, c, a-b, a-c, b-c, or a-b-c, where a, b, and c may be singular or plural.

The foregoing describes the method embodiments in embodiments of this application with reference to the accompanying drawings, and the following describes apparatus embodiments in embodiments of this application. It may be understood that, descriptions of the method embodiments and descriptions of the apparatus embodiments may correspond to each other. Therefore, for a part that is not described, refer to the foregoing method embodiments.

The foregoing mainly describes the solutions provided in embodiments of this application from a perspective of interaction between network elements. It may be understood that, to implement the foregoing functions, each of the network elements such as a transmit end device or a receive end device includes a corresponding hardware structure and/or a corresponding software module for performing each of the functions. A person skilled in the art should be aware that, in combination with examples described in embodiments disclosed in this specification, units and algorithm steps can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmit end device or a receive end device may be divided based on the foregoing method examples. For example, each of the functional modules may be obtained through division based on each corresponding function, or two or more functions may be integrated into one processing module. The integrated module may be implemented in a form of hardware, or may be implemented in a form of a software functional module. It should be noted that, division of the modules in embodiments of this application is an example, and is merely logical function division. In an actual implementation, there may be another division manner. The following uses an example in which each of the functional modules is obtained through division based on each corresponding function for description.

FIG. 6 is a block diagram of a communication apparatus according to an embodiment of this application. The communication apparatus 600 shown in FIG. 6 includes an interface unit 610. Optionally, the communication apparatus further includes a processing unit 620. The interface unit 610 may communicate with the outside, and the processing unit 620 is configured to perform data processing. The interface unit 610 may also be referred to as a communication interface, a transceiver unit, or a communication unit.

Optionally, the communication apparatus 600 may further include a storage unit. The storage unit may be configured to store instructions and/or data. The processing unit 620 may read the instructions and/or the data in the storage unit.

In a design, the communication apparatus 600 may be configured to perform an action performed by the terminal device in the foregoing method embodiments.

Optionally, the communication apparatus 600 may be a terminal device, the interface unit 610 is configured to perform a receiving or sending operation of the terminal device in the foregoing method embodiments, and the processing unit 620 is configured to perform an operation that is internally processed by the terminal device in the foregoing method embodiments.

Optionally, the communication apparatus 600 may be a component configured in the terminal device, for example, a chip in the terminal device. In this case, the interface unit 610 may be an interface circuit, a pin, or the like. Specifically, the interface circuit may include an input circuit and an output circuit, and the processing unit 620 may include a processing circuit.

In a possible implementation, the interface unit 610 is configured to receive first configuration information from a network device, where the first configuration information is for configuring a first threshold and a second threshold; and the interface unit 610 is further configured to send a scheduling request to the network device, where the scheduling request is for requesting a resource for scheduling data, and the scheduling request indicates at least one of a value relationship between a remaining delay budget of the data and the first threshold or a value relationship between a data amount of the data and the second threshold, where the remaining delay budget of the data is an upper limit of remaining duration for completing transmission of the data.

In a possible implementation, the scheduling request indicates one of the following relationships: the data amount of the data is less than the second threshold; the data amount of the data is greater than or equal to the second threshold, and the remaining delay budget of the data is greater than or equal to the first threshold; or the data amount of the data is greater than or equal to the second threshold, and the remaining delay budget of the data is less than the first threshold.

In a possible implementation, the scheduling request indicates one of the following relationships: the remaining delay budget of the data is greater than or equal to the first threshold; the remaining delay budget of the data is less than the first threshold, and the data amount of the data is less than the second threshold; or the remaining delay budget of the data is less than the first threshold, and the data amount of the data is greater than or equal to the second threshold.

In a possible implementation, the scheduling request indicates one of the following relationships: the remaining delay budget of the data is greater than or equal to the first threshold, and the data amount of the data is less than the second threshold; the remaining delay budget of the data is greater than or equal to the first threshold, and the data amount of the data is greater than or equal to the second threshold; the remaining delay budget of the data is less than the first threshold, and the data amount of the data is less than the second threshold; or the remaining delay budget of the data is less than the first threshold, and the data amount of the data is greater than or equal to the second threshold.

In a possible implementation, the scheduling request is carried in a physical uplink control channel PUCCH format 0.

In a possible implementation, the interface unit 610 is further configured to receive second configuration information from the network device; and the processing unit is configured to: control, based on the second configuration information, the communication apparatus 600 to send the scheduling request to the network device.

In a design, the communication apparatus 600 may be configured to perform an action performed by the network device in the foregoing method embodiments.

Optionally, the communication apparatus 600 may be a network device, the interface unit 610 is configured to perform a receiving or sending operation of the network device in the foregoing method embodiments, and the processing unit 620 is configured to perform an operation that is internally processed by the network device in the foregoing method embodiments.

Optionally, the communication apparatus 600 may be a component configured in the network device, for example, a chip in the network device. In this case, the interface unit 610 may be an interface circuit, a pin, or the like. Specifically, the interface circuit may include an input circuit and an output circuit, and the processing unit 620 may include a processing circuit.

In a possible implementation, the interface unit is configured to send first configuration information to a terminal device, where the first configuration information is for configuring a first threshold and a second threshold; and the interface unit is further configured to receive a scheduling request from the terminal device, where the scheduling request is for requesting a resource for scheduling data, and the scheduling request indicates at least one of a value relationship between a remaining delay budget of the data and the first threshold or a value relationship between a data amount of the data and the second threshold, where the remaining delay budget of the data is an upper limit of remaining duration for completing transmission of the data.

For the value relationship indicated by the scheduling request, refer to the foregoing first possible design. Details are not described again.

In a possible implementation, the scheduling request is carried in a physical uplink control channel PUCCH format 0.

In a possible implementation, the interface unit 610 is further configured to send second configuration information to the terminal device, where the second configuration information configures sending of the scheduling request.

As shown in FIG. 7, an embodiment of this application further provides a communication apparatus 700. The communication apparatus 700 includes a processor 710. The processor 710 is coupled to a memory 720. The memory 720 is configured to store a computer program or instructions and/or data. The processor 710 is configured to execute the computer program or the instructions and/or the data stored in the memory 720, so that the method in the foregoing method embodiments is performed.

Optionally, the communication apparatus 700 includes one or more processors 710.

Optionally, as shown in FIG. 7, the communication apparatus 700 may further include the memory 720.

Optionally, the communication apparatus 700 may include one or more memories 720.

Optionally, the memory 720 may be integrated with or separately arranged from the processor 710.

Optionally, as shown in FIG. 7, the communication apparatus 700 may further include a transceiver 730 and/or a communication interface. The transceiver 730 and/or the communication interface are/is configured to receive and/or send a signal. For example, the processor 710 is configured to control the transceiver 730 and/or the communication interface to receive and/or send a signal.

Optionally, a component that is in the transceiver 730 and that is configured to implement a receiving function may be considered as a receiving module, and a component that is in the transceiver 730 and that is configured to implement a sending function may be considered as a sending module. That is, the transceiver 730 includes a receiver and a sender. The transceiver may also be referred to as a transceiver machine, a transceiver module, a transceiver circuit, or the like. The receiver may also be referred to as a receiver machine, a receiving module, a receiver circuit, or the like. The sender may also be referred to as a transmitter machine, a transmitter, a transmitting module, a transmitting circuit, or the like.

In a solution, the communication apparatus 700 is configured to implement an operation performed by the terminal device in the foregoing method embodiments. For example, the processor 710 is configured to implement an operation that is internally performed by the terminal device in the foregoing method embodiments, and the transceiver 730 is configured to implement a receiving or sending operation (for example, operations of S410 to S460, or operations of S510 to S550) performed by the terminal device in the foregoing method embodiments.

In a solution, the communication apparatus 700 is configured to implement an operation performed by the network device in the foregoing method embodiments. For example, the processor 710 is configured to implement an operation that is internally performed by the network device in the foregoing method embodiments, and the transceiver 730 is configured to implement a receiving or sending operation (for example, operations of S410 to S460 or operations of S510 to S550) performed by the network device in the foregoing method embodiments.

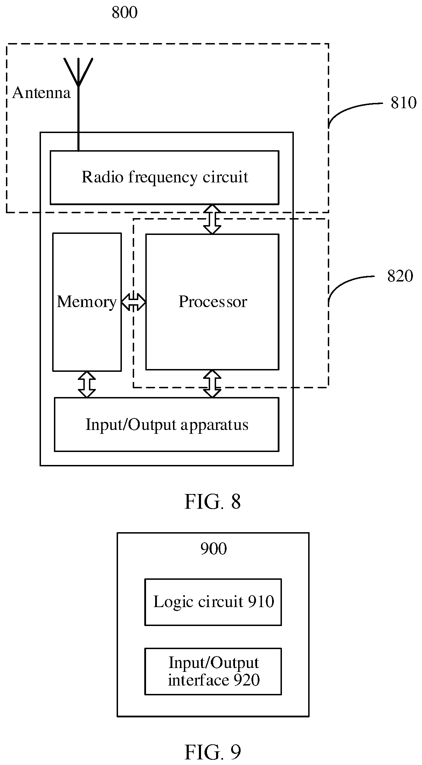

FIG. 8 is a diagram of a structure of a simplified communication apparatus. As shown in FIG. 8, the communication apparatus 800 includes a processor, a memory, a radio frequency circuit, an antenna, and an input/output apparatus. The processor is mainly configured to: process a communication protocol and communication data, control the communication apparatus 800, execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

When data needs to be sent, after performing baseband processing on the to-be-sent data, the processor outputs a baseband signal to the radio frequency circuit; and the radio frequency circuit performs radio frequency processing on the baseband signal and then sends a radio frequency signal to the outside in the form of the electromagnetic wave through the antenna. When data is sent to the communication apparatus 800, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 8. In an actual product, there may be one or more processors and one or more memories. The memory may also be referred to as a storage medium, a storage device, or the like. The memory may be arranged independent of the processor, or may be integrated with the processor. This is not limited in embodiments of this application.

In this embodiment of this application, the antenna and the radio frequency circuit that have receiving and sending functions may be considered as a transceiver unit of the communication apparatus 800, and the processor that has a processing function may be considered as a processing unit of the communication apparatus 800.

As shown in FIG. 8, the communication apparatus 800 includes a transceiver unit 810 and a processing unit 820. The transceiver unit 810 may also be referred to as a transceiver, a transceiver machine, a transceiver apparatus, a transceiver circuit, or the like. The processing unit 820 may also be referred to as a processor, a processing board, a processing module, a processing apparatus, or the like.

Optionally, a component that is in the transceiver unit 810 and that is configured to implement the receiving function may be considered as a receiving unit, and a component that is in the transceiver unit 810 and that is configured to implement the sending function may be considered as a sending unit. That is, the transceiver unit 810 includes the receiving unit and the sending unit. The receiving unit may also be referred to as a receiver machine, a receiver, a receiving apparatus, a receiving circuit, or the like. The sending unit may also be referred to as a transmitter machine, a transmitter, a transmitting apparatus, a transmitting circuit, or the like.

In an implementation, the processing unit 820 and the transceiver unit 810 are configured to perform an operation of a terminal device.

For example, the transceiver unit 810 is configured to perform, for example, receiving and sending operations in operations of S410 to S460, or receiving and sending operations in operations of S510 to S550.

In another implementation, the processing unit 820 and the transceiver unit 810 are configured to perform an operation of a network device.

For example, the transceiver unit 810 is configured to perform, for example, receiving and sending operations in operations of S410 to S460, or receiving and sending operations in operations of S510 to S550.

It should be understood that, FIG. 8 is merely an example rather than a limitation. The communication apparatus 800 including the transceiver unit and the processing unit may not depend on the structure shown in FIG. 8.

When the communication apparatus 800 is a chip, the chip includes a transceiver unit and a processing unit. The transceiver unit may be an input/output circuit or a communication interface. The processing unit may be a processor, a microprocessor, or an integrated circuit integrated on the chip.

As shown in FIG. 9, an embodiment of this application further provides a communication apparatus 900. The communication apparatus 900 includes a logic circuit 910 and an input/output interface (input/output interface) 920.

The logic circuit 910 may be a processing circuit in the communication apparatus 900. The logic circuit 910 may be coupled and connected to a storage unit, and invoke instructions in the storage unit, so that the communication apparatus 900 may implement the methods and functions in embodiments of this application. The input/output interface 920 may be an input/output circuit in the communication apparatus 900, and outputs information processed by the communication apparatus 900, or inputs to-be-processed data or signaling information to the communication apparatus 900 for processing.

In a solution, the communication apparatus 900 is configured to implement an operation performed by the terminal device in the foregoing method embodiments.

For example, the logic circuit 910 is configured to implement a processing-related operation performed by the terminal device in the foregoing method embodiments. The input/output interface 920 is configured to implement a sending and/or receiving-related operation performed by the terminal device in the foregoing method embodiments. For the specific operation performed by the logic circuit 910, refer to the foregoing descriptions of the processing unit 620. For the operation performed by the input/output interface 920, refer to the foregoing descriptions of the interface unit 610. Details are not described herein again.

In another solution, the communication apparatus 900 is configured to implement an operation performed by the network device in the foregoing method embodiments.

For example, the logic circuit 910 is configured to implement a processing-related operation performed by the network device in the foregoing method embodiments, for example, a processing-related operation performed by the network device in the method embodiments. The input/output interface 920 is configured to implement a sending and/or receiving-related operation performed by the network device in the foregoing method embodiments. For the specific operation performed by the logic circuit 910, refer to the foregoing descriptions of the processing unit 620. For the operation performed by the input/output interface 920, refer to the foregoing descriptions of the transceiver unit 610. Details are not described herein again.

It should be understood that, the communication apparatus may be one or more chips. For example, the communication apparatus may be a field programmable gate array (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps of the foregoing methods may be completed via an integrated logic circuit of hardware in a processor or instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps of the foregoing methods in combination with hardware of the processor. To avoid repetition, details are not described herein again.

It should be noted that, the processor in embodiments of this application may be an integrated circuit chip having a signal processing capability. In an implementation process, steps of the foregoing method embodiments may be completed via an integrated logic circuit of hardware in a processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

It may be understood that, the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative descriptions, many forms of RAMs may be available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that, memories of the systems and methods described in this specification are intended to include, but are not limited to, these memories and any memory of another proper type.

According to the methods provided in embodiments of this application, this application further provides a computer-readable medium. The computer-readable medium stores program code. When the program code is run on a computer, the computer is caused to perform the methods shown in the method embodiments. For example, when a computer program is executed by a computer, the computer may implement the methods performed by the terminal device or the methods performed by the network device in the foregoing method embodiments.

An embodiment of this application further provides a computer program product including instructions. When the instructions are executed by a computer, the computer is caused to implement the methods performed by the terminal device or the methods performed by the network device in the foregoing method embodiments.

For explanations and beneficial effects of related content in any one of communication apparatuses provided above, refer to the corresponding method embodiments provided above. Details are not described herein again.

All or a part of the foregoing embodiments may be implemented by using software, hardware, firmware, or any combination thereof. When software is used for implementing embodiments, all or a part of embodiments may be implemented in a form of a computer program product. The computer program product includes one or more computer instructions. When the computer instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be stored in a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The terminal device and the network device in the foregoing apparatus embodiments correspond to the terminal device and the network device in the method embodiments. A corresponding module or unit performs a corresponding step. For example, a communication unit (transceiver) performs a receiving step or a sending step in the method embodiments, and a processing unit (processor) may perform a step other than the sending step and the receiving step. For a function of a specific unit, refer to a corresponding method embodiment. There may be one or more processors.

Terms such as "component", "module", and "system" used in this specification are used for indicating computer-related entities, hardware, firmware, a combination of hardware and software, software, or software in execution. For example, a component may be, but is not limited to, a process that runs on a processor, a processor, an object, an executable file, a thread of execution, a program, and/or a computer. As shown in the figure, both an application that runs on a computing device and the computing device may be components. One or more components may reside in the process and/or the thread of execution, and the component may be located on one computer and/or distributed between two or more computers. In addition, the components may be executed from various computer-readable media that store various data structures. For example, the components may communicate, based on, for example, a signal having one or more data packets (for example, data from two components interacting with another component in a local system, a distributed system, and/or across a network such as the internet interacting with other systems via the signal), through a local and/or remote process.

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatuses, and units, refer to a corresponding process in the foregoing method embodiments. Details are not described herein again.

In a plurality of embodiments provided in this application, it should be understood that, the disclosed system, apparatuses, and methods may be implemented in other manners. For example, the apparatus embodiments described above are merely an example. For example, division of the units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or the units may be in electronic, mechanical, or other forms.

Units described as separate parts may or may not be physically separate, and parts displayed as units may or may not be physical units, to be specific, may be located at one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to a conventional technology, or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that may store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first configuration information from a network device, wherein the first configuration information is for configuring a first threshold and a second threshold; and
sending a scheduling request to the network device, wherein the scheduling request is for requesting a resource for scheduling data, and the scheduling request indicates at least one of a value relationship between a remaining delay budget of the data and the first threshold or a value relationship between a data amount of the data and the second threshold, wherein the remaining delay budget of the data is an upper limit of remaining duration for completing transmission of the data.

2. The method according to claim 1, wherein the scheduling request indicates one of the following relationships:
the data amount of the data is less than the second threshold;
the data amount of the data is greater than or equal to the second threshold, and the remaining delay budget of the data is greater than or equal to the first threshold; or
the data amount of the data is greater than or equal to the second threshold, and the remaining delay budget of the data is less than the first threshold.

3. The method according to claim 1, wherein the scheduling request indicates one of the following relationships:
the remaining delay budget of the data is greater than or equal to the first threshold;
the remaining delay budget of the data is less than the first threshold, and the data amount of the data is less than the second threshold; or
the remaining delay budget of the data is less than the first threshold, and the data amount of the data is greater than or equal to the second threshold.

4. The method according to claim 1, wherein the scheduling request indicates one of the following relationships:
the remaining delay budget of the data is greater than or equal to the first threshold, and the data amount of the data is less than the second threshold;
the remaining delay budget of the data is greater than or equal to the first threshold, and the data amount of the data is greater than or equal to the second threshold;
the remaining delay budget of the data is less than the first threshold, and the data amount of the data is less than the second threshold; or
the remaining delay budget of the data is less than the first threshold, and the data amount of the data is greater than or equal to the second threshold.

5. The method according to any one of claims 1 to 4, wherein the scheduling request is carried in a physical uplink control channel PUCCH format 0.

6. The method according to any one of claims 1 to 5, wherein the method further comprises:
receiving second configuration information from the network device; and
the sending a scheduling request to the network device comprises:
sending the scheduling request to the network device based on the second configuration information.

7. A communication method, comprising:
sending first configuration information to a terminal device, wherein the first configuration information is for configuring a first threshold and a second threshold; and
receiving a scheduling request from the terminal device, wherein the scheduling request is for requesting a resource for scheduling data, and the scheduling request indicates at least one of a value relationship between a remaining delay budget of the data and the first threshold or a value relationship between a data amount of the data and the second threshold, wherein the remaining delay budget of the data is an upper limit of remaining duration for completing transmission of the data.

8. The method according to claim 7, wherein the scheduling request indicates one of the following relationships:
the data amount of the data is less than the second threshold;
the data amount of the data is greater than or equal to the second threshold, and the remaining delay budget of the data is greater than or equal to the first threshold; or
the data amount of the data is greater than or equal to the second threshold, and the remaining delay budget of the data is less than the first threshold.

9. The method according to claim 7, wherein the scheduling request indicates one of the following relationships:
the remaining delay budget of the data is greater than or equal to the first threshold;
the remaining delay budget of the data is less than the first threshold, and the data amount of the data is less than the second threshold; or
the remaining delay budget of the data is less than the first threshold, and the data amount of the data is greater than or equal to the second threshold.

10. The method according to claim 7, wherein the scheduling request indicates one of the following relationships:
the remaining delay budget of the data is greater than or equal to the first threshold, and the data amount of the data is less than the second threshold;
the remaining delay budget of the data is greater than or equal to the first threshold, and the data amount of the data is greater than or equal to the second threshold;
the remaining delay budget of the data is less than the first threshold, and the data amount of the data is less than the second threshold; or
the remaining delay budget of the data is less than the first threshold, and the data amount of the data is greater than or equal to the second threshold.

11. The method according to any one of claims 7 to 10, wherein the scheduling request is carried in a physical uplink control channel PUCCH format 0.

12. The method according to any one of claims 7 to 11, wherein the method further comprises:
sending second configuration information to the terminal device, wherein the second configuration information configures sending of the scheduling request.

13. A communication apparatus, wherein the apparatus comprises an interface unit, wherein
the interface unit is configured to receive first configuration information from a network device, wherein the first configuration information is for configuring a first threshold and a second threshold; and
the interface unit is further configured to send a scheduling request to the network device, wherein the scheduling request is for requesting a resource for scheduling data, and the scheduling request indicates at least one of a value relationship between a remaining delay budget of the data and the first threshold or a value relationship between a data amount of the data and the second threshold, wherein the remaining delay budget of the data is an upper limit of remaining duration for completing transmission of the data.

14. The apparatus according to claim 13, wherein the scheduling request indicates one of the following relationships:
the data amount of the data is less than the second threshold;
the data amount of the data is greater than or equal to the second threshold, and the remaining delay budget of the data is greater than or equal to the first threshold; or
the data amount of the data is greater than or equal to the second threshold, and the remaining delay budget of the data is less than the first threshold.

15. The apparatus according to claim 13, wherein the scheduling request indicates one of the following relationships:
the remaining delay budget of the data is greater than or equal to the first threshold;
the remaining delay budget of the data is less than the first threshold, and the data amount of the data is less than the second threshold; or
the remaining delay budget of the data is less than the first threshold, and the data amount of the data is greater than or equal to the second threshold.

16. The apparatus according to claim 13, wherein the scheduling request indicates one of the following relationships:
the remaining delay budget of the data is greater than or equal to the first threshold, and the data amount of the data is less than the second threshold;
the remaining delay budget of the data is greater than or equal to the first threshold, and the data amount of the data is greater than or equal to the second threshold;
the remaining delay budget of the data is less than the first threshold, and the data amount of the data is less than the second threshold; or
the remaining delay budget of the data is less than the first threshold, and the data amount of the data is greater than or equal to the second threshold.

17. The apparatus according to any one of claims 13 to 16, wherein the scheduling request is carried in a physical uplink control channel PUCCH format 0.

18. The apparatus according to any one of claims 13 to 17, wherein the interface unit is further configured to receive second configuration information from the network device; and
the apparatus further comprises a processing unit, and the processing unit is configured to:
control, based on the second configuration information, the apparatus to send the scheduling request to the network device.

19. A communication apparatus, wherein the apparatus comprises an interface unit, wherein the interface unit is configured to send first configuration information to a terminal device, wherein the first configuration information is for configuring a first threshold and a second threshold; and
the interface unit is further configured to receive a scheduling request from the terminal device, wherein the scheduling request is for requesting a resource for scheduling data, and the scheduling request indicates at least one of a value relationship between a remaining delay budget of the data and the first threshold or a value relationship between a data amount of the data and the second threshold, wherein the remaining delay budget of the data is an upper limit of remaining duration for completing transmission of the data.

20. The apparatus according to claim 19, wherein the scheduling request indicates one of the following relationships:
the data amount of the data is less than the second threshold;
the data amount of the data is greater than or equal to the second threshold, and the remaining delay budget of the data is greater than or equal to the first threshold; or
the data amount of the data is greater than or equal to the second threshold, and the remaining delay budget of the data is less than the first threshold.

21. The apparatus according to claim 19, wherein the scheduling request indicates one of the following relationships:
the remaining delay budget of the data is greater than or equal to the first threshold;
the remaining delay budget of the data is less than the first threshold, and the data amount of the data is less than the second threshold; or
the remaining delay budget of the data is less than the first threshold, and the data amount of the data is greater than or equal to the second threshold.

22. The apparatus according to claim 19, wherein the scheduling request indicates one of the following relationships:
the remaining delay budget of the data is greater than or equal to the first threshold, and the data amount of the data is less than the second threshold;
the remaining delay budget of the data is greater than or equal to the first threshold, and the data amount of the data is greater than or equal to the second threshold;
the remaining delay budget of the data is less than the first threshold, and the data amount of the data is less than the second threshold; or
the remaining delay budget of the data is less than the first threshold, and the data amount of the data is greater than or equal to the second threshold.

23. The apparatus according to any one of claims 19 to 22, wherein the scheduling request is carried in a physical uplink control channel PUCCH format 0.

24. The apparatus according to any one of claims 19 to 23, wherein the interface unit is further configured to:
send second configuration information to the terminal device, wherein the second configuration information configures sending of the scheduling request.

25. A communication apparatus, wherein the apparatus comprises a unit configured to perform the method according to any one of claims 1 to 6.

26. A communication apparatus, wherein the apparatus comprises a unit configured to perform the method according to any one of claims 7 to 12.

27. A communication apparatus, wherein the apparatus comprises a processor, the processor is coupled to a memory, and the memory stores instructions; and when the instructions are run by the processor, the apparatus is caused to perform the method according to any one of claims 1 to 6.

28. A communication apparatus, wherein the apparatus comprises a processor, the processor is coupled to a memory, and the memory stores instructions; and when the instructions are run by the processor, the apparatus is caused to perform the method according to any one of claims 7 to 12.

29. A computer-readable storage medium, wherein the computer-readable storage medium is configured to store a computer program; and when the computer program is run on a computer, the computer is caused to perform the method according to any one of claims 1 to 6, or perform the method according to any one of claims 7 to 12.

30. A computer program product, wherein the computer program product comprises computer program code; and when the computer program code is run, the method according to any one of claims 1 to 6 is implemented, or the method according to any one of claims 7 to 12 is performed.

31. A communication system, comprising the apparatus according to any one of claims 13 to 18 and the apparatus according to any one of claims 19 to 24.
